# EUROPEAN PATENT SPECIFICATION

(11) **EP 1 159 816 B1**
(45) Date of publication and mention of the grant of the patent: **12.11.2003**
(21) Application number: 00916170.4
(22) Date of filing: 09.03.2000
(51) Int. Cl.: H04L 29/06

(54) **SYSTEM AND METHOD FOR PROTECTING NETWORKS FROM INADVERTENT, FRAUDULENT AND/OR MALICIOUS SIGNALING**
SYSTEM UND VERFAHREN ZUM SCHUTZ EINES NETZES VOR UNABSICHTLICHER, MISSGEBRAUCHTER UND/ODER BÖSWILLIGER SIGNALISIERUNG
PROTECTION DES RESEAUX CONTRE LES SIGNAUX NON INTENTIONNELS, FRAUDULEUX ET/OU MALINTENTIONNES ET SYSTEME A CET EFFET

(30) Priority: 10.03.1999 US 124321 P; 20.12.1999 US 467466
(43) Date of publication of application: 05.12.2001
(73) Proprietor: Inet Technologies, Inc., Plano, TX 75075 (US)
(72) Inventor: PATTERSON, Timothy, K., Allen, TX 75013 (US); KIRK, Chris, Edwin, Van Alstyne, TX 75495 (US); BIDULOCK, Brian, Frederick, George, Plano, TX 75093 (US)
(74) Representative: Jackson, Richard Eric
(86) International application number: US0006076
(87) International publication number: WO00054476

(56) References cited:
- WO-A-98/47275
- US-A- 5 550 984
- US-A- 5 706 286
- US-A- 5 793 771

## Description

### RELATED APPLICATIONS

This application claims the benefit of provisional application serial no. 60/124,321, filed March 10, 1999, entitled IP SIGNALING GUARDIAN.

### TECHNICAL FIELD

The present invention relates to signaling between networks and, more particularly, to monitoring and detecting inadvertent and/or malicious signaling flows exchanged between networks.

### BACKGROUND

The explosion in Internet use combined with the use of dial access as the preferred method of accessing the Internet has created stress for the traditional local telephone networks. This stress is a direct result of the length of the call hold times during Internet access calls versus the length of traditional voice calls. The existing telephone networks, which are based upon the traditional voice call model, have been engineered for a three to five minute call hold time. However, the average Internet access call over the telephone network typically lasts more than 20 minutes and many Internet access calls last for hours. These longer Internet access call hold times create trunk congestion. Accordingly, there is a need to relieve traditional voice networks from the burden created by Internet access calls.

U. S. Patent No. 5,706, 286 describes a telecommunications system which provides validation of authorization codes input by a user for placing a call from a service area of a first telecommunications service provider with a calling card issued by another service provider.

WO 98/47275 describes a signalling network gateway device which includes a protocol interface unit. The protocol interface unit converts signalling information between a first format and a second format.

U. S. Patent No. 5,550,984 describes a security system for connecting a first computer network to second computer network.

"Firewall-Systeme" from Norbert Pohlmann, ISBN 3-8266-4044-6, edited in 1998 by MITP-Verlag GmbH, pages 113-114, 124, 137 to 139 refers to packet filters that analyse a destination and source address to prevent communications with certain systems, servers or routers.

### SUMMARY OF THE INVENTION

The present invention reduces the Internet access load on voice networks and provides carrier class SS7/IP interoperability between the circuit-switched Public Switched Telephone Network (PSTN) and packet networks, such as the Internet. The system disclosed herein allows enhanced services and applications to be imported and exported between packet and circuit-switched networks, thus enabling services such as Internet Traffic Redirection, Voice-over-IP (VoIP) and SS7/IP Signaling Gateway. The disclosed inter-network gateway also allows services, such as Internet redirect, VoIP, Fax over IP, and IN/AIN/TCAP, to be co-located by supporting different signaling interfaces, such as SS7/DS0, SS7/IP, and SS7/ATM.

The inter-network gateway performs an Internet redirect function. By placing a modem pool or Remote Access Server (RAS) closer to end office switches, Internet data can be directly off-loaded from the PSTN at the ingress switch where an Internet access call is initiated. The inter-network gateway routes data from the end office switch to the modem pool using SS7 out-of-band signaling versus Primary Rate Interface (PRI) trunks. The inter-network gateway accepts the SS7 call signaling, maps the information concerning which voice circuit contains the incoming call and routes the call data to a modem pool. The inter-network gateway provides the ability to simultaneously interface with multiple RAS/NAS and media gateways, thereby allowing service providers to choose whichever equipment best fits their technical and financial needs. The gateway provides an Open Applications Programing Interface (API) to allow hosting and delivery of productivity enhancing services and cost saving services, such as click and talk, interactive chat, worldwide forwarding, multi-party calling, virtual assistants, virtual second line, circuit bypass, toll bypass, and Internet voice mail.

The inter-network gateway terminates multiple SS7 links and provides the functionality of an SS7 Signaling Service Point (SSP) or Signaling Transfer Point (STP), including the capability of handling Message Transfer Part (MTP) routing, Global Title Translation (GTT) and gateway screening. The inter-network gateway also provides multiple independent 10/100 Ethernet ports and TCP/IP protocol implementation and supports narrowband and broadband signaling, including SS7 over DS0, SS7 over unchannelized T1 and Asynchronous Transfer Mode (ATM) over T1.

The inter-network gateway further consolidates a plurality of discrete SS7 links at one node and translates messages into SS7 over IP WAN for distribution to a plurality of media gateway controllers. Multiple RASs, Network Access Servers (NAS) and media gateways are combined into a small number of pointcodes as viewed by the SS7 network to conserve the number of pointcodes used.

The gateway includes a call framework that provides full call processing, database transaction processing and billing capabilities. SS7 application-level protocols, such as Integrated Services Digital Network -User Part (ISUP), Telephone User Part (TUP), Network User Part (NUP) and Transaction Capabilities Application Part (TCAP), and IP application-level protocols, including proprietary device control protocols and support for emerging IP telephony standards, are also supported.

The Internet redirect application running on the inter-network gateway is capable of handling a large number of can attempts, calls in-progress, and RAS/NAS interfaces. The application is capable of working simultaneously with RAS/NAS/media gateways from different vendors to provide the network operator with the greatest flexibility.

The inter-network gateway also includes a software application that monitors the IP/SS7 border and protects each network from harmful and suspicious signaling from the other network. This signaling guardian function is described in co-pending application serial no. 09/466,948, entitled SYSTEM AND METHOD FOR PROVIDING INTEROPERABILITY BETWEEN CIRCUIT-SWTTCHED AND PACKET NETWORKS, filed concurrently herewith.

The inter-network gateway further comprises a signaling gateway firewall that provides SS7 and IP signaling screening. The signaling gateway firewall provides security measures to protect the SS7 and IP networks from inadvertent, malicious or fraudulent signaling from another network. The signaling firewall has the capability to block, pass or modify suspect signal units and to generate alarms to the operator upon detoction of suspect signaling units.

It is an advantage of the present invention to provide an interface between two networks having unique protocols and to allow information to be exchanged between the networks. In a preferred embodiment, the present invention provides an interface between SS7 networks and IP networks, thereby providing an alternate path for routing call and transaction messages.

It is another advantage of the present invention to provide a system and method for redirecting Internet traffic to an IP network via an RAS at a local switch in order to reduce Internet access traffic on a circuit-switched network.

It is a further advantage of the present invention to provide a system and method for controlling the routing of Voice over IP (VOIP) traffic over a circuit-switched network and an associated packet network.

It is an additional advantage of the present application to monitor signaling flows between SS7 and IP networks and to detect improper or incorrect messages.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 is a high level block diagram of a network incorporating the present invention;
FIGURE 2 is a block diagram illustrating the relationship between a number of networks incorporating the present invention;
FIGURE 3 is a block diagram illustrating the use of the present invention to communicate between two SS7 networks;
FIGURE 4 is a block diagram of the internal organization of an exemplary embodiment the present invention;
FIGURE 5 illustrates the relationship between software functions in an exemplary embodiment of the present invention;
FIGURE 6 is a block diagram of a system using the present invention to provide an Internet redirect function;
FIGURE 7 is a block diagram of a system employing an alternative embodiment of the present invention to provide Internet redirect function;
FIGURE 8 is a block diagram of a system using the present invention to route Voice over IP calls;
FIGURE 9 is a block diagram of a system employing an alternative embodiment of the present invention to route Voice over IP calls; and
FIGURE 10 is a flowchart illustrating the exchange of information between SS7 and IP networks using the present invention.

### DETAILED DESCRIPTION

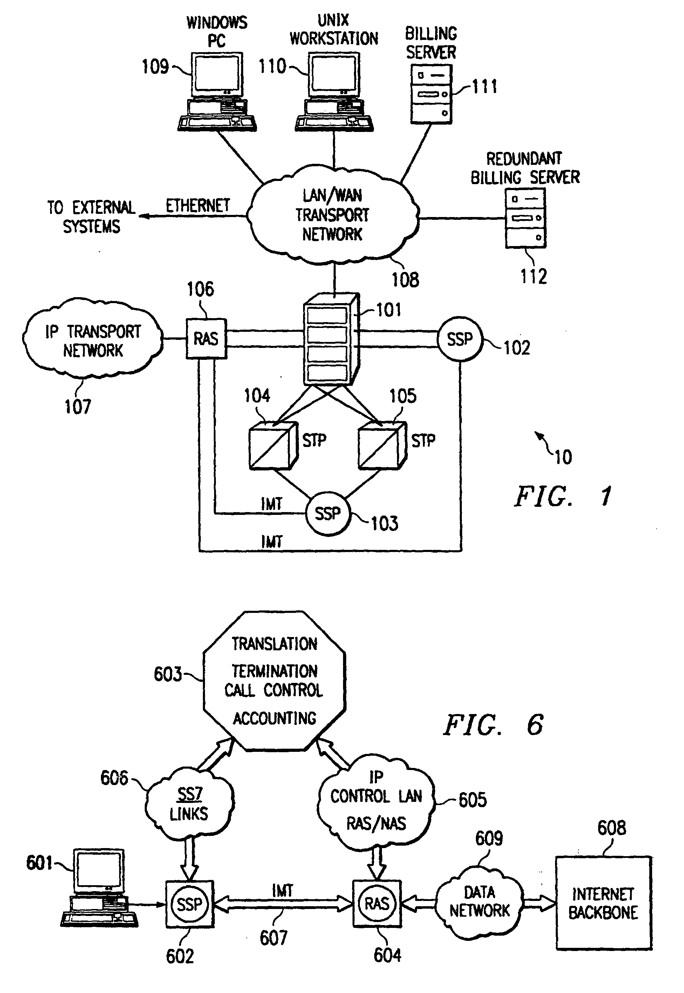

FIGURE 1 illustrates SS7/IP network 10 having inter-network gateway 101. Gateway 101 can be linked directly to SSP 102 or linked remotely to SSP 103 through STPs 104 and 105. RAS 106 is linked to gateway 101 and to SSPs 102 and 103. RAS 106 provides access to IP Transport Network 107. Gateway 101 is also connected to LAN/WAN transport network 108, which provides access to workstations 109 and 110 and to billing servers 111 and 112.

Network 108 also allows gateway 101 to communicate with other external systems (not shown), for example, via Ethernet connections. External applications may include Call Detail Record generation, such as the system disclosed in pending application serial no. 09/093,824, entitled TRANSACTION CONTROL APPLICATION PART (TCAP) CALL DETAIL RECORD GENERATION IN A COMMUNICATIONS SYSTEM, filed June 8, 1998. Additionally, information may be exchanged with a quality assurance system, such as the system disclosed in pending application serial number 09/093,955, entitled SYSTEM AND METHOD FOR MONITORING SERVICE QUALITY IN A COMMUNICATIONS NETWORK, also filed June 8, 1998.

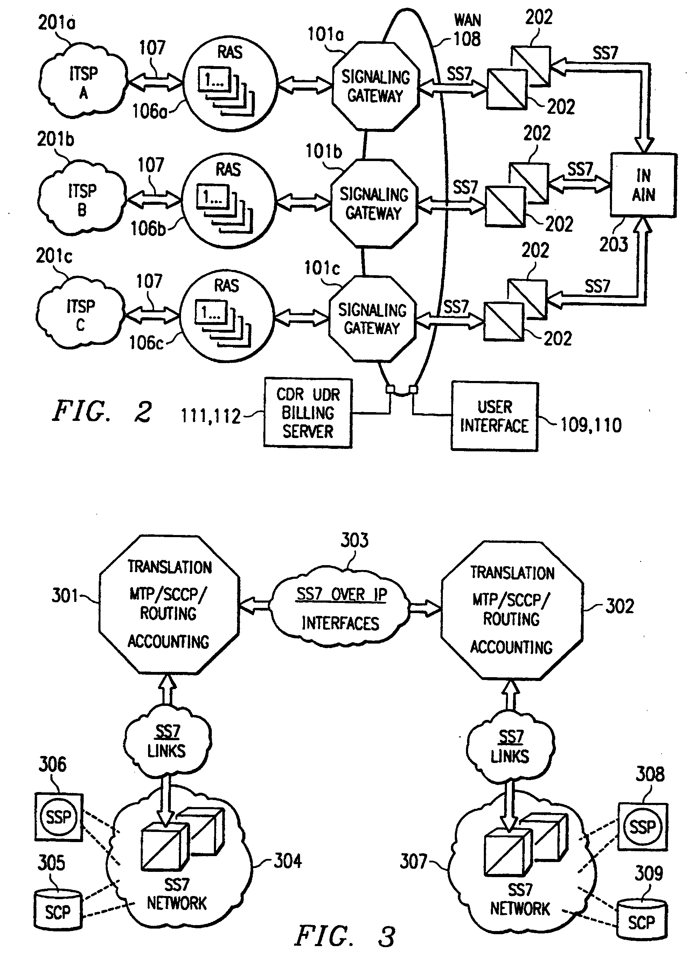

LAN/WAN Transport Network 108 may couple a number of inter-network gateways 101 as illustrated in FIGURE 2, in which gateways 101a-c are coupled via WAN 108. Each gateway 101a-c is also connected to a RAS. RASs 106a-c provide access to Internet Telephony Service Providers 201a-c via IP Transport Network 107.Inter-network Gateways 101a-c are connected to an SS7 network, such as Advanced Intelligent Network (AIN) 203, through STPs 202.

Two Inter-network Gateways, such as Gateways 301 and 302 (FIGURE 3), may communicate with each other via IP network 303. This configuration provides an alternative method for transmitting SS7 messages. SS7 network 304 comprises components such as SCP 305 and SSP 306, and SS7 netwrk 307 comprises components 308 and 309. SS7 networks 304 and 307 may be sub-parts of one larger SS7 network (not shown) or they may be two separate, independent SS7 networks. If SS7 networks 304 and 307 cannot communicate directly, for example, because there are no SS7 links between the networks or because the links (not shown) are congested or out of service, then nodes 305, 306 and nodes 308, 309 would not be able to communicate. However, in networks having Inter-network Gateways, such as Gateways 301 and 302, SS7 messages between networks 304 and 307 may be routed via an alternative path, such as across IP Transport Network 303.

Inter-network Gateways 301 and 302 include a Signaling Gateway Application, which provides the capability to switch SS7 signaling data via a packet network, such as the Internet. The Signaling Gateway Application supports various protocols for transport of signaling data and may be modified to support any future protocols. For example, the Signaling Gateway Application supports the Bellcore ISCP-IP Interface. Bellcore's ISCP Generic Data Interface (GDI) provides the capability to send/receive transactions to/from external systems over TCP/IP using TCAP messages. This allows a Bellcore standardized mechanism to provide for TCAP inter-working between an SS7 and an IP network. Additionally, using ASCII mnemonics, the Signaling Gateway Application allows service providers to inspect the signaling units that are between the SS7 and IP networks. As such, the operator can view the protocol messages that are transmitted and received from the Inter-network Gateway. This capability is available for signaling unit messages from both the SS7 network and the IP transport network.

The signaling unit inspection feature allows service providers to perform traffic analysis. The operator may select various filters to identify signaling units of interest. The filtered signaling units may be displayed to the operator on a Graphical User Interface display so that the signal unit data can be easily accessed and analyzed. Typically, only certain portions of the signaling unit data will be displayed. For example, for SS7 data, the signaling units may not be completely decoded, but only the signal unit label and H1H0 code will be available for user parts other than SCCP. For SCCP signal units, all signal unit parameters except the SCCP user data will be decoded.

Inter-network Gateways, 301 or 302, also provide their own transport protocol which defines the interface between an SS7 network and an IP network. The transport protocol provides the following aspects of the interface: transport, addressing, routing, application support and security. Transport is the ability to move application data, such as ISUP, TUP, SCCP, TCAP, etc., between two disparate networks. The transport protocol takes into account such issues as congestion and timing constraints. The protocol provides network address translation facilities and allows address mapping between two networks. Routing functions handle the routing issues such as load balancing and failure conditions. The transport protocol provides security mechanisms that monitor the signaling interface, including IP level security and application level security for ISUP calls, TCAP transactions and other events.

Inter-network Gateways, 301 and 302, support the full SS7 protocol stack as illustrated in Table 1.

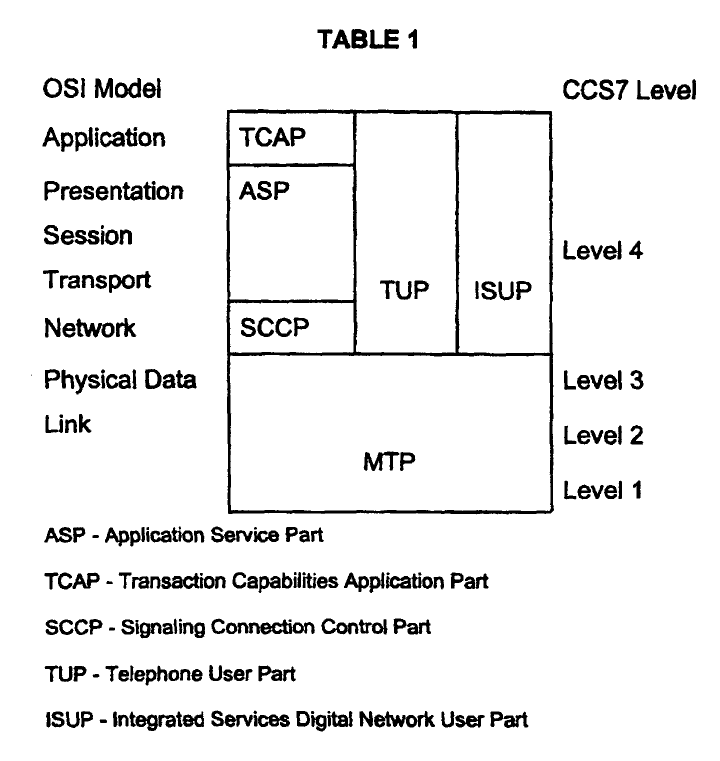

Inter-network Gateway 301 or 302 functions essentially as an STP or STP associated pair. Multiple pointcodes can be associated with the Inter-network Gateway through the user of Virtual Signaling Points (VSPs). The Gateway can host a plurality of pointcodes, wherein each pointcode represents an SSP node in the SS7 network. The Gateway can also represent itself to the network as a mated pair of STPs with a plurality of multiple virtual pointcodes, for example, up to 256 pointcodes, representing virtual SSPs for additional functionality. Each VSP simulates the behavior of an ISUP switch attached as a signaling endpoint in the SS7 network behind the STP or STP associated pair that is presented to the network.

The use of VSPs allows the Inter-network Gateway to present different pointcodes to different networks, which provides the capability to manage inter-network traffic without having to specify the internal network architecture.

A redundant process in the Inter-network Gateway exists for each virtual pointcode (VPC). The VPC process is responsible for communicating over a virtual route set with the MTP stack. There is one redundant VPC process for each virtual pointcode.

In addition to the STP functions, the Inter-network Gateway supports the ISUP protocol for establishment of basic telephone call connection and disconnections and for the transmission of voice or data traffic and supports the TCAP protocol to access network databases. Additionally, Inter-network Gateway 301 or 302 has the capability to perform MTP routing and network management functions required by an STP in an SS7 network.

The specialized routing and management functions of the SS7 SCCP are also supported by the Inter-network Gateway. This allows for non-circuit related signaling to be used in the SS7 network for capabilities such as replicated databases and intelligent network functionality. Preferably, both ANSI and ITU defined SCCP formats and protocols are supported, including connectionless services, coordinated state change procedures, and local broadcast of subsystem status information. Further, Translation Type Mapping features, which deal with the manipulation of the Translation Type field in SS7 messages that cross network boundaries, are also supported by the Inter-network Gateway.

The Inter-network Gateway provides gateway screening for both ANSI and ITU networks. All incoming and outgoing messages can be examined and any unauthorized SS7 messages can be rejected based upon provisioned screening details, such as incoming linkset or outgoing linkset.

Other SS7 functionality in the preferred embodiment includes cluster routing or the ability to specify and carry out MTP routing using only the network ID and network cluster portions of the Destination Point Code to determine the outgoing route.

In addition to the STP functionality that is supported, the Inter-network Gateway supports the trunk call management functions that are required by a service switching point in an SS7 network. The Gateway supports procedures for setting up, coordinating and taking down trunk calls on the SS7 network. ISUP implementation is also provided if required by the application.

The Inter-network Gateway supports a 10/100 BaseT Ethernet interfaces. These interfaces may be independent and may be connected to separate LAN segments. The Gateway also supports a complete suite of Internet Protocol capabilities, including TCP, UDP, ICMP and FTP, and is capable of supporting any future developed IP protocols. TABLE 2 illustrates the IP protocol stack supported by the Inter-network Gateway.

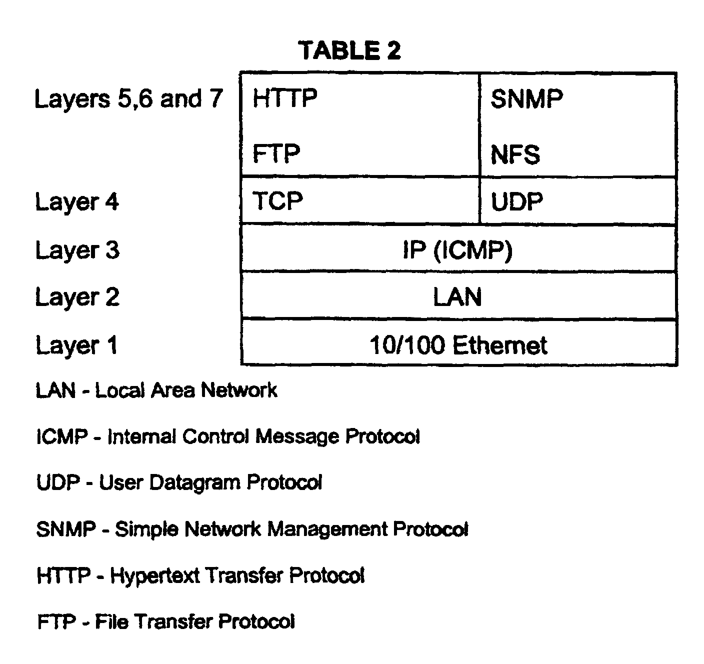

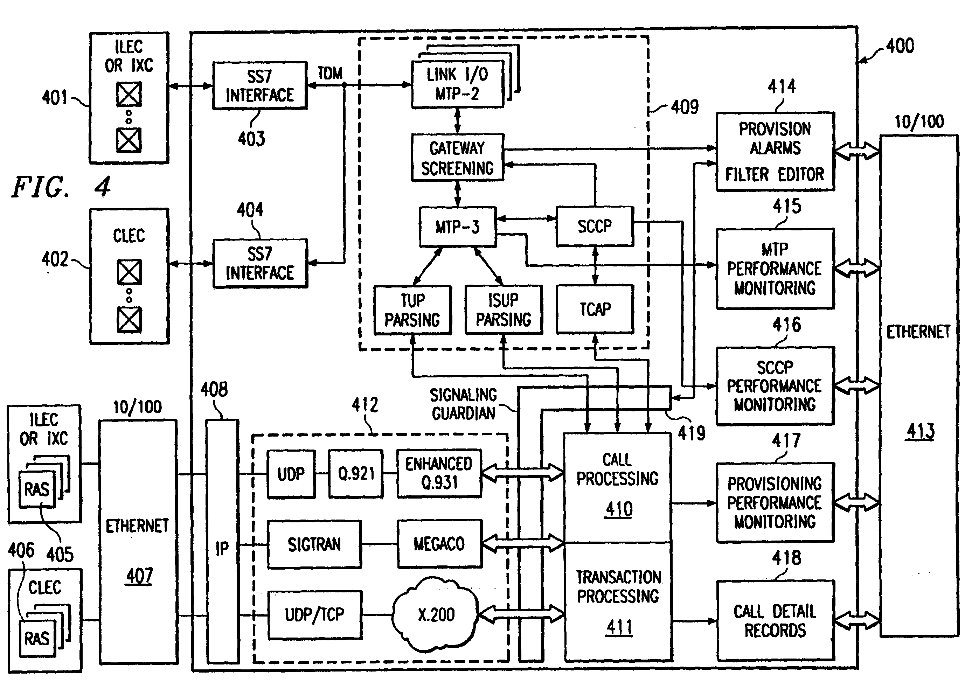

FIGURE 4 illustrates exemplary components of Inter-network Gateway 400, which is connected to SS7 networks 401 and 402 via SS7 interfaces 403 and 404. Gateway 400 is also connected to IP networks via RAS 405 and 406. Data is exchanged with RAS 405 and 406 via Ethernet 407 and IP interface 408.

Section 409 includes the components that are used for processing SS7 messages and for operating on the information in each level of the SS7 protocol. Messages to and from the IP network are processed in section 412, which includes the functionality for operating on messages that follow an IP protocol. Messages and information are not directly exchanged between SS7 processing section 409 and IP processing section 412. Instead, the information carried by the signaling units or messages is processed by call processor 410 or transaction processor 411. One embodiment of the function and operation of transaction processor 411 is disclosed in pending application serial no. 09/092,771, entitled SYSTEM AND METHOD FOR CORRELATING TRANSACTION MESSAGES IN A COMMUNICATIONS NETWORK and filed September 18, 1998.

Call processor 410 and transaction processor 411 respectively receive all call and transaction messages and provide routing, correlating, tracking, monitoring and other functions. Messages may be routed from one SS7 network 401 to another SS7 network 402. Alternatively, messages may be routed from an SS7 network, 401 or 402, to an IP network via RAS 405 or 406.

System operators interface with Inter-network Gateway 400 through Ethernet 413. Processors 414-418 receive data and messages from SS7 processing section 409, call processor 410, transaction processor 411 and IP processing section 412. Processors 414-418 are selectively configured by the operator to perform functions such as alarm monitoring, message filtering, performance monitoring, and generating or routing call detail records. This information is presented to the operator on a workstation, such as 109 or 110, or sent to external processors, such as billing servers 111 and 112.

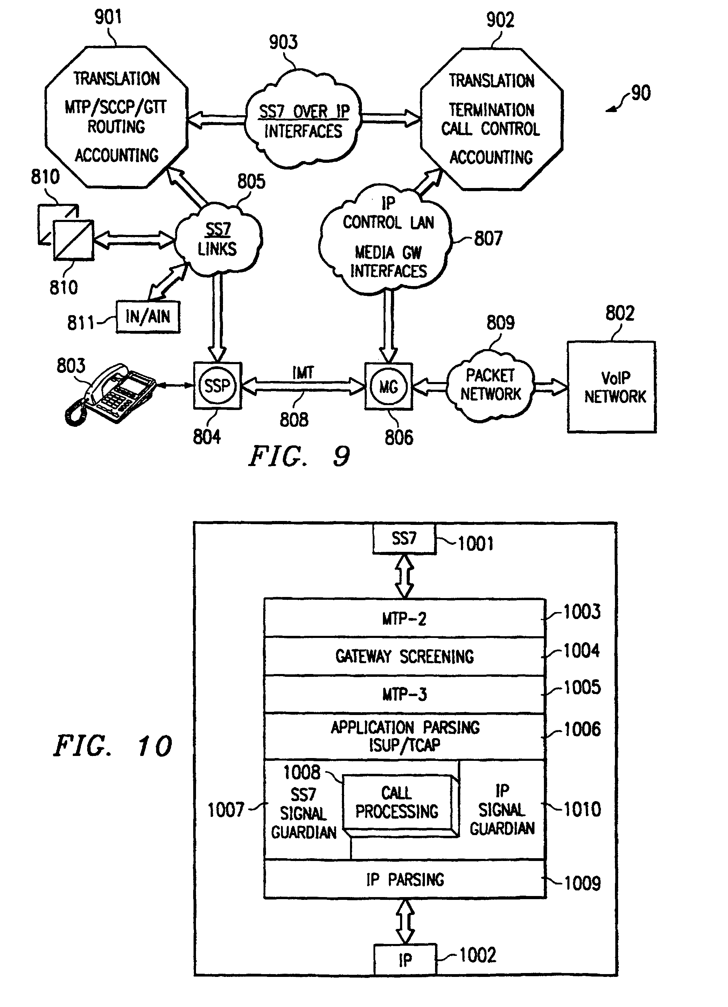

All messages pass through Signaling Guardian 419, which is configured to detect and eliminate fraudulent, inadvertent and malicious signals or messages. The operation of Signaling Guardian 419 is described in additional detail in the discussion of FIGURE 10 below.

Returning to FIGURE 3, Inter-network Gateways 301 and 302 may be embodied as shown by Gateway 400. In such a configuration, SS7 messages are received from networks 304 and 307 via SS7 interfaces 403 and 404. These messages are then routed through SS7 message processing section 409, call and transaction processors 410 and 411, and IP processing section 412. The SS7 messages are converted to an IP protocol and transmitted across IP interface 303, which interfaces with the Gateways via IP interface 408. Gateways 301 and 302 perform message translation and routing functionality as well as accounting and other monitoring functions configured by the system operator.

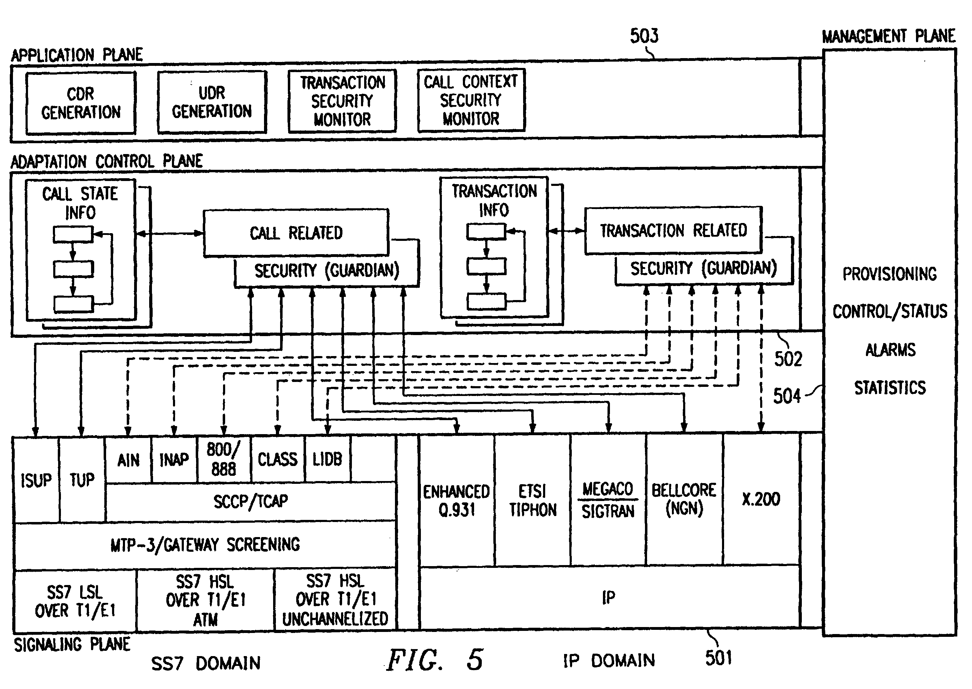

FIGURE 5 illustrates the functional architecture of a preferred embodiment of the Inter-network Gateway. All signaling protocol termination, signaling interworking functions, application processing and management functions are performed by this architecture, which is comprised of four abstract planes: Signaling plane 501, Adaptation Control plane 502, Application plane 503 and Management plane 504.

Signaling plane 501 provides the physical interface to the signaling data as well as the signaling transport protocol support. Additionally, signaling plane 501 supports a robust TCP/IP protocol stack.

Adaptation control plane 502 provides call and transaction processing state machines and inter-working functionality. Adaptation control plane 502 provides a call framework that supports the implementation and execution of call control applications.

Application plane 503, using API, provides the capability to implement user-defined services, such as Call Detail Record generation. Applications written by customers or third-party vendors are also supported.

Management plane 504 contains the provisioning, alarm, access security, statistics, data storage and diagnostic mechanisms that are needed for efficient control and management of the Inter-network Gateway.

Service providers may access the system via a web-based interface that allows the operator to configure system parameters and to access system information. The web interface provides security verification to limit access to authorized users. The user may access: provisioning, alarms, statistics, administration, maintenance and status functions via the interface. Provisioning functions allow the user to add or delete elements, such as pointcodes, links, linksets, or trunks, or to set parameters for components, such as protocols, applications or alarms. An alarms display identifies the component against which the alarm has been generated and provides information to help solve potential problems. The user can retrieve all operations and administrative measurements as well as generate statistics reports on usage and system performance. Administrative functions allow the operator to set user profiles and security parameters. Maintenance functions, such as link activation/deactivation, may be performed via the remote interface. System component status is also available to the user.

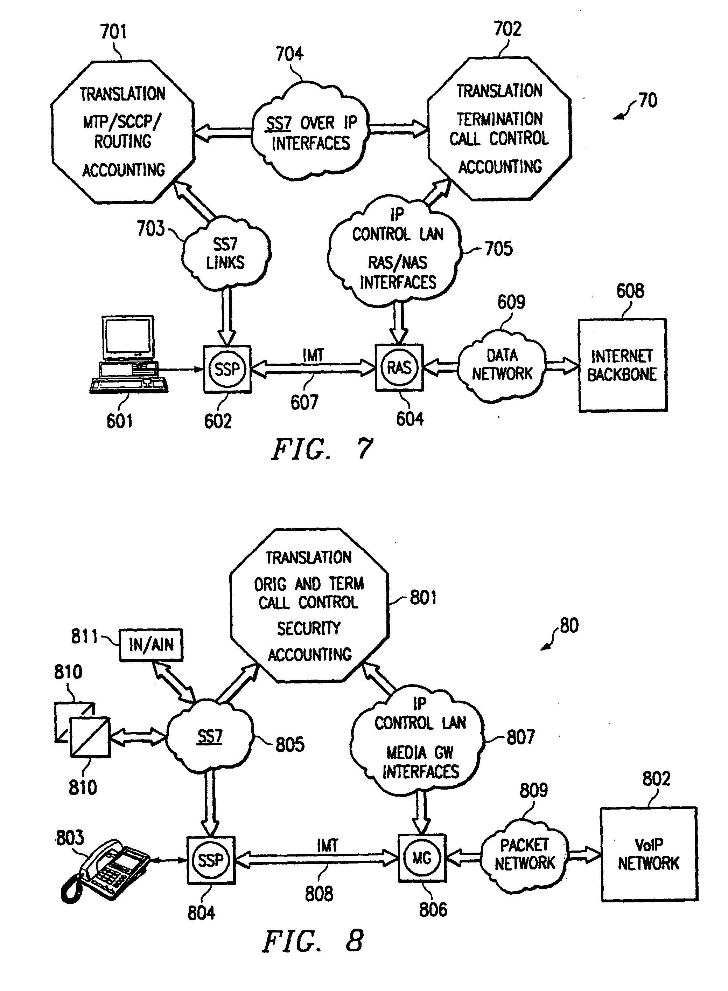

FIGURES 6 and 7 illustrate two embodiments of an Internet Redirection Application using the present invention. The Internet Redirect Application provides a solution to the increasing network demand caused by Internet access calls. The Internet Redirect Application enables access to Remote Access Servers through SS7 out-of-band signaling and Inter-Machine Trunks versus ISDN PRI RAS interfacing.

An Inter-network Gateway running the Internet Redirect Application, which supports the ISUP signaling protocol, has the capability to appear in the SS7 network as one or more physical signaling points, such as Signaling End Points (SEPs), each with A-linksets for connecting to an STP or F-linksets for connecting to a fully associated signaling network. The Inter-network Gateway also has Virtual Signaling Point (VSP) capabilities that allow it to appear to the SS7 network as an STP or STP associated pair with one or more virtual SEPs reachable through the STP or STP pair.

The physical and virtual SEPs each mimic the behavior of a virtual ISUP switch attached as an SEP in the SS7 network and each has an ISUP stack with a full ISUP state machine. On top of the ISUP state machine is a call state adapter that provides an abstraction of the SS7 network-side call leg to the call framework. The call framework is the central call processing for the switching element and is responsible for maintaining call state and for all the operations normally associated with calls in a telephone switch.

In FIGURE 6, a caller at terminal 601 initiates an Internet access call by dialing the number for an Internet service provider. The dialed digits are processed by the end office 602 and call set-up signaling is sent over the SS7 network. The call set-up information is routed to Inter-network Gateway 603 via SS7 out-of-band signaling over SS7 links 606. Gateway 603, which is running the Internet Redirect Application, maps the call information to a specific voice circuit that carries the Internet access call and routes the call to a modem pool or RAS 604. Gateway 603 and RAS 604 communicate via IP network 605. The caller's Internet access session is established over IMT 607 between SSP 602 and RAS 604, which provides a connection to Internet 608 via IP network 609.

In FIGURE 7, there is no direct link between end office 602 and Inter-network Gateway 702, which is running the Internet Redirect Application. Therefore, in network 70, the call set-up signaling is routed first to Inter-network Gateway 701, which is running a Signaling Gateway Application. Gateway 701 receives the SS7 call set-up information related to the caller's (601) Internet access call via SS7 links 703. The SS7 call data is converted to a packet-based message for transmission across IP interface 704 to Gateway 702, which processes the call set-up data and identifies which voice circuit carries the caller's Internet access call. Gateway 702 then routes the call to RAS 604 for access to Internet 608.

It will be understood from the networks disclosed in FIGURES 6 and 7, that the Signaling Gateway Application functions and Internet Redirect Applications do not have to reside on the same Inter-network Gateway. Furthermore, link 606/703 between end office 602 and Gateway 603/701 may be a direct link or may comprise one or more distinct SS7 links having one or more intermediate STPs or other signaling nodes.

The Internet Redirect Application running on Gateway 603 or 702 includes a telephony call framework having a high-level software architecture that is responsible for the coordination of call state. The telephony call framework is responsible for the signaling of call control information within a network of telephone network devices as well as the control of both in-band and out-of-band call information within a network element.

In a preferred embodiment, mirrored redundancy is used in the Inter-network Gateways that are running the Internet Redirect Application. In order to prevent system failures, for each processor running the Internet Redirect Application, there is a redundant processor running a call framework in a mirrored configuration.

Additionally, the Internet Redirect Application also provides operators, who can manage the Internet Redirect Application remotely a web browser, with the ability to inspect the protocol signal messages that are transmitted and received through the Inter-network Gateway. This capability is supported for signaling unit messages from both the SS7 and the IP transport networks.

In another embodiment, the Inter-network Gateway can be used to route Voice over IP (VoIP) calls. FIGURES 8 and 9 illustrate networks in which Gateway 801 or Gateways 901 and 902 are used to route VoIP calls to VoIP network 802. In network 80, a caller at telephone 803 initiates a VoIP call, which is first routed to local switch 804. Inter-network Gateway 801 receives call set-up signaling messages associated with the VoIP call via SS7 links 805 from end office 804. Gateway 801 identifies a particular Media Gateway 806 that should receive the VoIP call based upon the out-of-band signaling messages. Inter-network Gateway 801 maps the call information to a specific voice circuit that is carrying the VoIP call and routes the call to Media Gateway 806. Inter-network Gateway 801 and Media Gateway 806 communicate via IP network 807. The VoIP call is routed via IMT 808 in the circuit-switched network between SSP 804 and Media Gateway 806. In Media Gateway 806, the voice call is converted to the appropriate packet format for transmission across network 809 to VoIP network 802, which may be part of the Internet.

In FIGURE 9, system 90 illustrates a network in which the VoIP call routing is set up using two Inter-network Gateways. Gateway 901 receives the call set-up information for the VoIP call from SSP 804 and translates the out-of-band SS7 signaling messages to packet messages. These converted packet messages are then sent to Inter-network Gateway 902 via IP network 903. Gateway 902 identifies the voice circuit that is carrying the VoIP call and directs SSP 804 to route the call to Media Gateway 806. Call set-up messages between Gateway 902 and Media Gateway 806 are exchanged over IP network 807. The call set-up messages that identify the appropriate Media Gateway 806 are communicated from Gateway 902 to SSP 804 over links 903 and 805 and through Gateway 901, which converts the messages from IP to SS7 protocols. SSP 804 then routes the VoIP call to Media Gateway 806, which converts the voice call to the proper packet format and directs the call to VoIP 802 for further routing to the called destination.

Inter-network Gateways 801, 901 and 902 are also in communication with STPs 810 and AIN 811 via SS7 links. This allows Gateways 801, 901 and 902 to exchange messages with other more remote network nodes and to obtain information from other network databases.

It will be understood that Inter-network Gateways 801, 901 and 902 may be used to exchange and route messages not only between SS7 and IP networks, but also between two SS7 networks, between two IP networks or between other networks having mixed protocols.

When messages are messages are exchanged between networks, it is possible that inadvertent, fraudulent or malicious signaling may also be exchanged. Signaling Guardian Application 419 (FIGURE 4) monitors all of the messages and signals that are exchanged between the Inter-network Gateway and the associated SS7 and IP networks. Signaling Guardian 419 provides a signaling gateway firewall for screening inter-network signaling flows. Firewall 419 has the capability to block, pass or modify signaling units that are received from or sent to the associated networks. Signaling Guardian 419 also provides MTP and SCCP policing. Alarms may be generated for the network operator upon detection of suspect signaling units.

FIGURE 10 is a flowchart that illustrates a preferred embodiment of the signaling flow processing that is performed in the Inter-network Gateway. Signaling Guardian Application 419 is a set of embedded functional elements that stop suspicious activity at the network border prior to any further entry to the network. Signaling flows between an IP network and an SS7 network, IP network to IP network, or SS7 network to SS7 network may be monitored.

Signaling Guardian 419 protects an SS7 network by applying security criteria to the signaling flows originating from an IP network. The security criteria may also be applied to signaling flows that originate in the SS7 network and that are translated or processed in the Inter-network Gateway before being routed back into the SS7 network. These security criteria include, but are not limited to, functional criteria, static criteria and dynamic criteria. Functional criteria ensure syntactic validity of the messages based on the SS7 signaling user part and/or signaling application. Static criteria include screening on ISUP message types; ISUP parameters, such as called number, calling number, and the like; TCAP application parts; TCAP parameters or any other call or transaction parameters. The third criteria is dynamic criteria, which includes security measures involving dynamic call data and/or call patterns. such as long duration calls, fraudulent call patterns, and IN/AIN application patterns.

Signaling Guardian 419 protects an IP network by applying the same types of security criteria (functional, static and dynamic) to the signal flowing to and from the IP network. These flows may originate in either the SS7 network or IP network and are translated and routed to the IP network. The functional, static and dynamic criteria for IP signaling flows are analogous to those is listed above and other packet based protocols. In addition, other IP specific security criteria such as IP Firewall functionality, TCP wrappers, and IPSec Encryption can be applied.

The signaling gateway firewall functionality is used to provide a "security shell" or "wrapper" around the call and transaction processing of the Inter-network Gateway. All signaling messages inbound or outbound, from either the SS7 network or IP network will pass through the security criteria of the signaling guardian firewall. All signaling messages that fail one or more of the security criteria can be discarded or allowed through based on predefined logic. Alarms can be output to OSS systems and/or fraud systems for analysis and action. System operators can configure the criteria that are used by Signaling Guardian Application 419 to identify suspect signaling flows and to pass, block or modify suspicious signaling units or messages.

In FIGURE 10, signaling flows are received from SS7 network 1001 or IP network 1002. Signaling flows from SS7 network 1001 are first processed by MTP layer 2 processing 1004 and initial gateway screening process 1004. Then, higher layer information is processed in the signaling flows in MTP layer 3 processing 1005 and application parsing processing 1006. Before call or transaction information is further processed in processor 1008, SS7 Signaling Guardian 1007 monitors and analyzes the SS7 signaling flow for suspicious signaling.

Signaling flows from IP network 1002 are first processed by IP parsing application 1009 before passing to IP Signal Guardian 1010, which detects and processes suspicious signaling flows.

After the message has been processed by call processing application 1008, associated message may be returned to SS7 network 1001 or passed to IP network 1002. In either case, the messages again must pass through SS7 Signal Guardian application 1007 or IP Signal Guardian application 1010.

Although the present invention and its advantages have been described in detail, it should be understood that various changes, substitutions and alterations can be made herein without departing from the scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for monitoring messages passing through a gateway device (400) in a signaling network, wherein the gateway device (400) receives messages having a first format from a first network (401, 402) and converts the received messages to a second format for transmission over a second network (407), the method **characterized by**:
evaluating the received messages using at least three types of security criteria before transmitting the converted messages over the second network (407), the evaluating step consisting of:
applying functional criteria to ensure the syntactic validity of the received messages;
applying static criteria to evaluate parameters within the received messages; and
applying dynamic criteris to evaluate call patterns; and converting selected ones of the received messages that satisfy each of the at least three types of security criteria.

2. The method of claim 1 further comprising:
discarding ones of the received messages that do not satisfy each of the at least three types of security critaria.

3. The method of claim 2 further comprising:
monitoring the discarded messages using alarm criteria that are configured by a user; and
generating an alarm to alert the user based upon the alarm criteria.

4. The method of claim 1 wherein the step of applying dynamic criteria further comprises:
evaluating call patterns to identify fraudulent call patterns.

5. The method of claim 1 wherein the step of applying dynamic criteria further comprises:
evaluating call patterns to identify long duration calls.

6. The method of claim 1 further comprising:
identifying suspect messages that do not meet each of the as least three types of criteria; and
modifying selected ones of the suspect messages so that the modified suspect message satisfies each of the at least three types of criteria.

7. A gateway (400) for providing inter-network security between an out-of-band signaling network (401, 402) and a packet-based network (407), wherein the gateway (400) is adapted to convert messages received from the signaling network (401, 402) to a packet format for transmission over the packet network (407), and wherein the gateway (400) is adapted to convert messages received from the packet network (407) to a signaling format for transmission over the out-of-band signaling network (401, 402), the gateway (400) **characterized by**:
means (1007, 1010) for evaluating the received messages using at least three types of security criteria, the means for evaluating consisting of:
first criteria means for analyzing the syntactic validity of the received messages;
second criteria means for screening parameters within the received messages; and
third criteria means for evaluating call patterns associated with the received messages;
means (1008) for converting selected ones of the received messages that satisfy each of the at least three types of security criteria.

8. The gateway (400) of claim 7 further comprising:
means (1007, 1010) for blocking ones of the received messages that do not satisfy each of the at least three types of security criteria.

9. The gaterway (400) of claim 8 further comprising:
means (414) for monitoring the blocked messages using alarm criteria that are configured by a user; and
means (414) for generating an alarm to alert the user based upon the alarm criteris.

10. The gateway (400) of claim 7 wherein the third criteria means further comprises:
means for evaluating call patterns to identify fraudulent call patterns.

11. The gateway (400) of claim 7 wherein the third criteria means further comprises:
means for evaluating call patterns to identify long duration calls.

12. The gateway (400) of claim 7 further comprising:
means for identifying suspect messages that do not meet each of the at least three types of criteria; and
means for modifying selected ones of the suspect messages so that the modified suspect message satisfies each of the at least three types of criteria.

13. The gateway (400) of claim 7 wherein the means for evaluating and means for converting are both embodied as software running on a processor in the gateway.

## Patentansprüche

1. Verfahren zum Überwachen von Nachrichten, die durch eine Gateway-Vorrichtung (400) in einem Signalisierungsnetzwerk hindurchtreten, wobei die Gateway-Vorrichtung (400) Nachrichten mit einem ersten Format von einem ersten Netzwerk (401, 402) empfängt und die empfangenen Nachrichten für eine Übertragung über ein zweites Netzwerk (407) in ein zweites Format umwandelt, wobei das Verfahren **gekennzeichnet ist durch**:
Auswerten der empfangenen Nachrichten, wobei zumindest drei Arten von Sicherheitskriterien verwendet werden, bevor die umgewandelten Nachrichten über das zweite Netzwerk (407) übertragen werden, wobei der Auswerteschritt folgendes beinhaltet:
Anwenden von funktionalen Kriterien, um die syntaktische Gültigkeit der empfangenen Nachrichten sicherzustellen;
Anwenden von statischen Kriterien, um Parameter innerhalb der empfangenen Nachrichten auszuwerten; und
Anwenden von dynamischen Kriterien, um Rufmuster auszuwerten; und
Umwandeln von ausgewählten empfangenen Nachrichten, die jeder der zumindest drei Arten von Sicherheitskriterien genügen.

2. Verfahren nach Anspruch 1, das ferner aufweist:
Verwerfen derjenigen empfangenen Nachrichten, die nicht jeder der zumindest drei Arten von Sicherheitskriterien genügen.

3. Verfahren nach Anspruch 2, das ferner aufweist:
Überwachen der verworfenen Nachrichten unter Verwendung von Alarmkriterien, die durch einen Anwender konfiguriert sind; und
Erzeugen eines Alarms, um den Anwender basierend auf den Alarmkriterien zu alarmieren.

4. Verfahren nach Anspruch 1, wobei der Schritt des Anwendens von dynamischen Kriterien ferner folgendes aufweist:
Auswerten der Rufmuster zum Identifizieren von betrügerischen Rufmustern.

5. Verfahren nach Anspruch 1, wobei der Schritt des Anwendens von dynamischen Kriterien ferner beinhaltet:
Auswerten der Rufmuster zum Identifizieren von Rufverbindungen langer Zeitdauer.

6. Verfahren nach Anspruch 1, das ferner beinhaltet:
Identifizieren von verdächtigen Nachrichten, die nicht jede der zumindest drei Arten von Kriterien erfüllen; und
Modifizieren von ausgewählten verdächtigen Nachrichten, so dass die modifizierten verdächtigen Nachrichten jeder der zumindest drei Arten von Kriterien genügen.

7. Gateway (400) zum Bereitstellen einer Inter-Netzwerk-Sicherheit zwischen einem Außer-Band-Signalisierungsnetzwerk (401, 402) und einem Paket-basierten Netzwerk (407), wobei das Gateway (400) dazu ausgebildet ist, von dem Signalisierungsnetzwerk (401, 402) empfangene Nachrichten in ein Paketformat zur Übertragung über das Paketnetzwerk (407) umzuwandeln, und wobei das Gateway (400) dazu ausgebildet ist, von dem Paketnetzwerk (407) empfangene Nachrichten in ein Signalisierungsformat zur Übertragung über das Außer-Band-Signalisierungsnetzwerk (401, 402) umzuwandeln, wobei das Gateway (400) **gekennzeichnet ist durch**:
Mittel (1007, 1010) zum Auswerten der empfangenen Nachrichten unter Verwendung von zumindest drei Arten von Sicherheitskriterien, wobei die Mittel zum Auswerten beinhalten:
Mittel für erste Kriterien zum Analysieren der syntaktischen Gültigkeit der empfangenen Nachrichten;
Mittel für zweite Kriterien zum Durchsuchen von Parametern innerhalb der empfangenen Nachrichten; und
Mittel für dritte Kriterien zum Auswerten von Rufmustern, die mit den empfangenen Nachrichten verbunden sind;
Mittel (1008) zum Umwandeln von ausgewählten empfangenen Nachrichten, die jeder der zumindest drei Arten von Sicherheitskriterien genügen.

8. Gateway (400) nach Anspruch 7, das ferner aufweist:
Mittel (1007, 1010) zum Blockieren derjenigen empfangenen Nachrichten, die nicht jeder der zumindest drei Arten von Sicherheitskriterien genügen.

9. Gateway (400) nach Anspruch 8, das ferner aufweist:
Mittel (414) zum Überwachen der blockierten Nachrichten unter Verwendung von Alarmkriterien, die durch einen Anwender konfiguriert sind; und
Mittel (414) zum Erzeugen eines Alarms, um den Anwender basierend auf den Alarmkriterien zu alarmieren.

10. Gateway (400) nach Anspruch 7, wobei die Mittel für die dritten Kriterien ferner beinhalten:
Mittel zum Auswerten von Rufmustern, um betrügerische Rufmuster zu identifizieren.

11. Gateway (400) nach Anspruch 7, wobei die Mittel für die dritten Kriterien ferner beinhalten:
Mittel zum Auswerten von Rufmustern, um Verbindungen langer Zeitdauer zu identifizieren.

12. Gateway (400) nach Anspruch 7, das ferner aufweist:
Mittel zum Identifizieren von verdächtigen Nachrichten, die nicht alle der zumindest drei Arten von Kriterien erfüllen; und
Mittel zum Modifizieren von ausgewählten verdächtigen Nachrichten, so dass die modifizierten verdächtigen Nachrichten jeder der zumindest drei Arten von Kriterien genügen.

13. Gateway (400) nach Anspruch 7, wobei die Mittel zum Auswerten und die Mittel zum Umwandeln jeweils als Software realisiert sind, die auf einem Prozessor in dem Gateway läuft.

## Revendications

1. Procédé de contrôle de messages passant par un dispositif (400) de passerelle dans un réseau de signalisation, dans lequel le dispositif (400) de passerelle reçoit des messages ayant un premier format d'un premier réseau (401, 402) et transforme les messages reçus en un deuxième format pour transmission sur un deuxième réseau (407), le procédé étant **caractérisé par** en ce que :
on évalue les messages reçus en utilisant au moins trois types de critère de sécurité avant de transmettre les messages transformés sur le deuxième réseau (407), le stade d'évaluation consistant :
- à appliquer des critères fonctionnels pour s'assurer de la validité syntaxique des messages reçus ;
- à appliquer des critères statiques pour évaluer des paramètres au sein des messages reçus ;
- à appliquer des critères dynamiques pour évaluer des configurations d'appels ; et
- à transformer parmi les messages reçus, des messages sélectionnés qui satisfont à chacun des au moins trois types de critère de sécurité.

2. Procédé suivant la revendication 1 qui consiste en outre :
- à écarter ceux des messages reçus qui ne satisfont pas à chacun des au moins trois types de critère de sécurité.

3. Procédé suivant la revendication 2, consistant en outre :
- à contrôler les messages écartés en utilisant des critères d'alerte, qui sont configurés par un utilisateur ;
- à engendrer une alerte pour alerter l'utilisateur sur la base des critères d'alerte.

4. Procédé suivant la revendication 1, dans lequel le stade d'application de critères dynamiques consiste en outre :
- à évaluer des configurations d'appels pour identifier des configurations d'appels frauduleuses.

5. Procédé suivant la revendication 1, dans lequel le stade d'application de critères dynamiques consiste en outre :
- à évaluer des configurations d'appels pour identifier des appels de longue durée.

6. Procédé suivant la revendication 1, consistant en outre
- à identifier des messages suspects qui ne satisfont pas à chacun des au moins trois types de critère ; et
- à modifier des messages sélectionnés parmi les messages suspects de sorte que le message suspect modifié satisfasse à chacun des au moins trois types de critère.

7. Passerelle (400) pour donner de la sécurité inter-réseau entre un réseau (401, 402) de signalisation hors bande et un réseau (407) à base de paquet, dans laquelle la passerelle (400) est apte à transformer des messages reçus du réseau (401, 402) de signalisation en un format de paquet pour transmission sur le réseau (407) à paquet et dans laquelle la passerelle (400) est apte à transformer des messages reçus du réseau (407) à paquet en un format de signalisation pour transmission sur le réseau (401, 402) de signalisation hors bande, la passerelle (400) étant **caractérisée par**:
- des moyens (1007, 1010) d'évaluation des messages reçus en utilisant au moins trois types de critère de sécurité, les moyens d'évaluation consistant en :
- des moyens à premier critère destinés à analyser la validité syntaxique des messages reçus ;
- des moyens à deuxième critère destinés à sélectionner des paramètres au sein des messages reçus ;
- des moyens à troisième critère destinés à évaluer des configurations d'appels associées aux messages reçus ;
- des moyens (1008) destinés à transformer parmi les messages reçus ceux sélectionnés qui satisfont à chacun des au moins trois types de critère de sécurité.

8. Passerelle (400) suivant la revendication 7, comprenant en outre :
- des moyens (1007, 1010) destinés à bloquer ceux des messages reçus qui ne satisfont pas à chacun des au moins trois types de critère de sécurité.

9. Passerelle (400) suivant la revendication 8, comprenant en outre
- des moyens (414) destinés à contrôler des messages bloqués en utilisant des messages d'alerte, qui sont configurés par un utilisateur ;
- des moyens (414) destinés à engendrer une alerte pour alerter l'utilisateur sur la base des critères d'alerte.

10. Passerelle (400) suivant la revendication 7, dans laquelle les moyens à troisième critère comprennent en outre :
- des moyens d'évaluation de configuration d'appels pour identifier des configurations d'appels qui sont frauduleuses.

11. Passerelle (400) suivant la revendication 7, dans laquelle les moyens à troisième critère comprennent en outre:
- des moyens d'évaluation de configuration d'appels pour identifier des appels de longue durée.

12. Passerelle (400) suivant la revendication 7, comprenant en outre :
- des moyens d'identification de messages suspects qui ne satisfont pas à chacun des au moins trois types de critère ;
- des moyens de modification de messages sélectionnés parmi les messages suspects de façon à ce que le message suspect modifié satisfasse à chacun des au moins trois types de critère.

13. Passerelle (400) suivant la revendication 7, dans laquelle les moyens d'évaluation et les moyens de transformation sont tous deux incorporés sous la forme d'un logiciel d'un processeur de la passerelle.
